# EUROPÄISCHE PATENTSCHRIFT

(11) **EP 2 594 510 B1**
(45) Veröffentlichungstag und Bekanntmachung des Hinweises auf die Patenterteilung: **30.04.2014**
(21) Anmeldenummer: 12187907.6
(22) Anmeldetag: 10.10.2012
(51) Int. Cl.: B65G 15/58, B65G 21/20, B65G 35/06

(54) **Fördervorrichtung**
Conveying device
Dispositif d'acheminement

(30) Priorität: 19.11.2011 DE 102011118977
(43) Veröffentlichungstag der Anmeldung: 22.05.2013
(73) Patentinhaber: ROBERT BOSCH GMBH, 70442 Stuttgart (DE)
(72) Erfinder: Stoeckle, Thomas, 70374 Stuttgart (DE); Buesing, Boris, 71686 Remseck (DE); Hinderer, Karl, 74427 Fichtenberg (DE); Ludwig, Peter, 72072 Tuebingen (DE)
(74) Vertreter: Maiß, Harald

(56) Entgegenhaltungen:
- WO-A2-2008/064834
- DD-A1- 228 790
- DE-A1- 4 210 188
- DE-A1- 19 538 350

## Beschreibung

Die Erfindung betrifft eine Fördervorrichtung gemäß dem Oberbegriff des Patentanspruchs 1.

In der GB 1 350 715 ist eine derartige Fördervorrichtung offenbart. Diese hat einen Tragwagen mit vier Rädern, über die dieser auf zwei Schienen gelagert ist. Zwischen den Schienen erstreckt sich ein Gurt unterhalb des Tragwagens, der in Richtung der Schienen bewegbar ist. Zum Verbinden des Gurts mit dem Tragwagen ist ein Elektromagnet am Tragwagen angeordnet. Der Tragwagen hat oberhalb des Gurtes eine Öffnung über die der Elektromagnet in einem eingeschalteten und somit bestromten Zustand am aus einem magnetischen Material bestehenden Gurt angreift. Hierfür ist der Elektromagnet verschiebbar gelagert. Im unbestromten Zustand wird er über Rückholfedern weg vom Gurt bewegt. Zur Bestromung des Elektromagneten des Tragwagens sind Strombahnen zwischen den Schienen vorgesehen, die über eine an dem Tragwagen angeordnete Stromabgreifeinrichtung mit den Elektromagneten elektrisch verbindbar sind.

Nachteilig bei dieser Lösung ist die vorrichtungstechnisch äußerst aufwendige Ausgestaltung der Fördervorrichtung.

Aus der DE 195 38 350 A1 ist eine Fördervorrichtung in Form eines Hängefördersystems bekannt. Die Tragvorrichtung ist gleitend in einer Profilschiene geführt, wobei das Tansportgut bezüglich der Richtung der Schwerkraft unterhalb der Profilschiene angeordnet ist. Oberhalb der Tragvorrichtung befindet sich ein Zugmittel in Form eines Transportbandes, das aus magnetisierbarem Material besteht. In der Tragvorrichtung befinden sich Permanentmagnete, welche die Tragvorrichtung mit dem Zugmittel verbinden können. Die Permanentmagenete sind in einem Magnetträgergehäuse angeordnet. Nachteilig ist, dass die Permanentmagnete das Zugmittel unmittelbar berühren. Hierdurch kann es zu Abrieb und Beschädigungen an den Permanentmagneten kommen, wenn Schlupf zwischen dem Zugmittel und der Tragvorrichtung auftritt. Dies ist beispielsweise der Fall, wenn die Tragvorrichtung an einer gewünschten Position stillgesetzt wird, wobei das Zugmittel weiterläuft. Dieser Nachteil wird durch die Erfindung überwunden.

Aus der DD 228 790 A1, der WO 2008/064834 A2 und der DE 42 10 188 A1 sind weitere Fördervorrichtungen bekannt, welche Magnete umfassen.

Weiter liegt der Erfindung die Aufgabe zugrunde eine vorrichtungstechnisch einfach aufgebaute Fördervorrichtung zu schaffen.

Diese Aufgabe wird gelöst mit den Merkmalen des Patentanspruchs 1.

Sonstige vorteilhafte Weiterbildungen der Erfindung sind Gegenstand weiterer Unteransprüche.

Erfindungsgemäß hat eine Fördervorrichtung eine zum transportieren eingesetzte Tragvorrichtung, insbesondere eine Trägerplatte. Diese ist über eine Führungsbahn verschiebbar in zumindest einer Förderrichtung gelagert und geführt. Zum Bewegen der Tragvorrichtung ist ein, sich insbesondere in Förderrichtung erstreckendes, Zugmittel angeordnet. Zum Verbinden der Tragvorrichtung mit dem Zugmittel, um eine Zugkraft vom Zugmittel auf die Tragvorrichtung zu übertragen, ist eine Magnetkraft eines Permanentmagneten vorgesehen.

Diese Lösung hat den Vorteil, dass die Verbindung der Tragvorrichtung mit dem Zugmittel mit einem geringen vorrichtungstechnischen Aufwand einfach mit einem Permanentmagneten erfolgt. Es sind insbesondere keine vorrichtungstechnisch aufwendig ausgestaltete Stromzuführungen, wie im eingangs erläuterten Stand der Technik, notwendig.

Vorzugsweise ist der Permanentmagnet an der Tragvorrichtung angeordnet. Somit ist denkbar, dass für unterschiedliche Tragvorrichtungen, das heißt Tragvorrichtungen mit unterschiedlichem Gewicht, unterschiedliche starke Permanentmagneten eingesetzt werden können und das Zugmittel nicht an die Tragvorrichtung angepasst werden muss.

In weiterer Ausgestaltung ist das Zugmittel ein, insbesondere umlaufendes, Zugband. Dieses kann sich dann entlang der Führungsbahn erstrecken, wodurch die Tragvorrichtung an einer beliebigen Stelle der Führungsbahn in Förderrichtung gesehen mit dem Zugband verbindbar ist. Denkbar wäre auch eine Mehrzahl von parallel oder in Reihe angeordneter Zugbänder einzusetzen.

Das Zugband besteht vorzugsweise aus einem magnetischen Material. Insbesondere weist es etwa in Förderrichtung sich erstreckende Stahllitzen auf, die in einem Kunststoff eingebettet sind.

In weiterer Ausgestaltung der Erfindung hat das Zugband eine Außenwandfläche, die an eine Angriffsfläche der Tragvorrichtung anlegbar ist. Über die Angriffsfläche wirkt dann die Magnetkraft des Permanentmagneten auf das Zugband. Eine derartige Anordnung erlaubt es, dass die Tragvorrichtung und das Zugband über die genannten Flächen aneinander haften oder relativ zueinander gleiten. Somit kann das Zugband die Tragevorrichtung auch dann in Förderrichtung aufgrund von Reibkräften antreiben, wenn die Außenbandfläche und die Angriffsfläche aufeinander abgleiten.

Mit Vorteil sind die Außenwandfläche des Zugbands und die Angriffsfläche der Tragvorrichtung derart ausgestaltet, dass diese bei Überschreiten einer vorbestimmten auf die Tragvorrichtung wirkenden Zugkraft aufeinander gleiten. Somit wird die auf die Tragvorrichtung durch das Zugband in Förderrichtung wirkende Beschleunigung begrenzt, wodurch beispielsweise ein sanftes Anfahren der Tragvorrichtung aus einem Stillstand möglich ist. Wird eine oder mehrere Tragvorrichtungen an einer Bewegung in Förderrichtung gehindert, beispielsweise weil sie das Ende der Fördervorrichtung erreicht haben (Staubetrieb), so kann das Zugband einfach unter der einen oder der Mehrzahl von Tragvorrichtungen entlang gleiten. Ein Verschleiß des Zugbands ist hierbei vorteilhafterweise äußerst gering. Des Weiteren ist eine Antriebsleistung eines Antriebs für das Zugband ebenfalls sehr gering, da die auf die Tragvorrichtung wirkende Zugkraft durch die Gleitmöglichkeit zwischen Tragvorrichtung und Zugband begrenzt ist.

Vorzugsweise beträgt eine Haltekraft zwischen der Außenwandfläche des Zugbands und der Angriffsfläche der Tragvorrichtung in Förderrichtung etwa maximal 10 N.

Es ist ein Magnetträgergehäuse an der Tragvorrichtung zum Lagern und Festlegen des zumindest einen Permanentmagneten angeordnet. Dieses besteht insbesondere aus einem nichtmagnetischen Material, wie beispielsweise Aluminium. Die Angriffsfläche der Tragvorrichtung kann dann am Magnetträgergehäuse ausgebildet sein.

Das Magnetträgergehäuse ist von einer nichtmagnetischen Lagerplatte begrenzt, wobei zumindest ein Abschnitt einer Außenfläche der Lagerplatte die Angriffsfläche bildet. Die Permanentmagneten können sich dann an einer Innenfläche der Lagerplatte abstützen. Hierdurch kann ein Abstand zwischen dem zumindest einen Permanentmagneten und dem Zugband durch eine Dicke der Lagerplatte eingestellt werden. Die Lagerplatte besteht insbesondere aus einem Kunststoff.

Sind eine Mehrzahl von Permanentmagneten vorgesehen, so können diese vorzugsweise matrixartig im Magnetträgergehäuse mit wechselweiser Polung angeordnet werden. Die Permanentmagneten weisen insbesondere einen kreiszylindrischen Querschnitt auf und liegen mit ihrer Stirnfläche auf der Innenfläche der Tragplatte. Zur Verstärkung der Magnetkraft eines oder mehrerer Permanentmagneten kann in das Magnetträgergehäuse zusätzlich ein magnetisches Element, wie beispielsweise eine Stahlplatte, eingesetzt werden.

In weiterer Ausgestaltung der Erfindung ist die Tragvorrichtung von der Führungsbahn relativ zum Zugband derart gelagert und geführt, dass ein an der Angriffsfläche der Tragvorrichtung anliegender Halteabschnitt des Zugbands von einer Führungsebene des Zugbands beabstandet ist. Das Zugband wird somit insbesondere im Bereich der Angriffsfläche etwa in Richtung einer Flächennormalen ihrer Außenwandfläche hin zur Tragvorrichtung versetzt. Dies hat den Vorteil, dass eine Innenmantelfläche des Zugbands, über die das Zugband geführt sein kann, von einer Zugbandführung im Bereich ihres Halteabschnitts beabstandet ist, wodurch eine Reibung zwischen dem Zugband und der Zugbandführung verkleinert ist. Sind mehrere Tragvorrichtungen vorgesehen, so sind entsprechend mehrere Halteabschnitte des Zugbands zur Führungsebene des Zugbands versetzt, wodurch eine Reibung zwischen der Innenmantelfläche des Zugbands und einer Führungsfläche weiter stark gesenkt wird.

Bevorzugter Weise beträgt ein Haftreibwert zwischen der Angriffsfläche der Tragvorrichtung und der Außenfläche des Zugbands zwischen 0,3 bis 0,5. Die Angriffsfläche der Tragvorrichtung und die Außenwandfläche des Zugbands sind hier im Wesentlichen eben ausgebildet. Denkbar wäre allerdings auch, dass diese Flächen eine Verzahnung aufweisen.

Vorteilhafterweise ist ein Abstand zwischen der Angriffsfläche und der Außenwandfläche im magnetfreien Zustand etwa 0,5 bis 2,0mm, wobei eine Dicke der Tragplatte 1 mm betragen kann.

Zur Führung der Tragvorrichtung hat die Führungsbahn zumindest zwei im Wesentlichen im Parallelabstand zueinander angeordneter Führungsschienen. Zwischen denen kann dann die Tragvorrichtung etwa quer zur Förderrichtung geführt sein und in Förderrichtung gleitend gelagert werden.

Um eine Lagerreibung zu minimieren, können an der Führungsbahn und / oder an der Tragvorrichtung Lagerrollen zum Führen und Lagern der Tragvorrichtung vorgesehen sein.

Zum Führen und Lagern des Zugmittels ist vorzugsweise ein Zugmittelträger vorgesehen, an dem auch ein Zugmittelantrieb angeordnet sein kann.

Im Folgenden wird anhand schematischer Zeichnungen ein bevorzugtes Ausführungsbeispiel der Erfindung näher erläutert. Es zeigen:
Figur 1 in einer perspektivischen Darstellung die erfindungsgemäße Fördervorrichtung gemäß einem Ausführungsbeispiels;
Figur 2 in einer Explosionsdarstellung einen Teil der erfindungsgemäßen Fördervorrichtung;
Figur 3 in einer Längsschnittansicht einen Ausschnitt der erfindungsgemäßen Fördervorrichtung;
Figur 4 in einer Querschnittansicht die erfindungsgemäße Fördervorrichtung;
Figur 5 eine weitere Längsschnittansicht eines Ausschnitts der erfindungsgemäßen Fördervorrichtung;
Figur 6 einen vergrößerten Ausschnitt A der Fördervorrichtung aus Figur 5;
Figur 7 in einer Explosionsdarstellung ein Magnetträgergehäuse der erfindungsgemäßen Fördervorrichtung, und
Figur 8 in einer perspektivischen Darstellung das Magnetträgergehäuse.

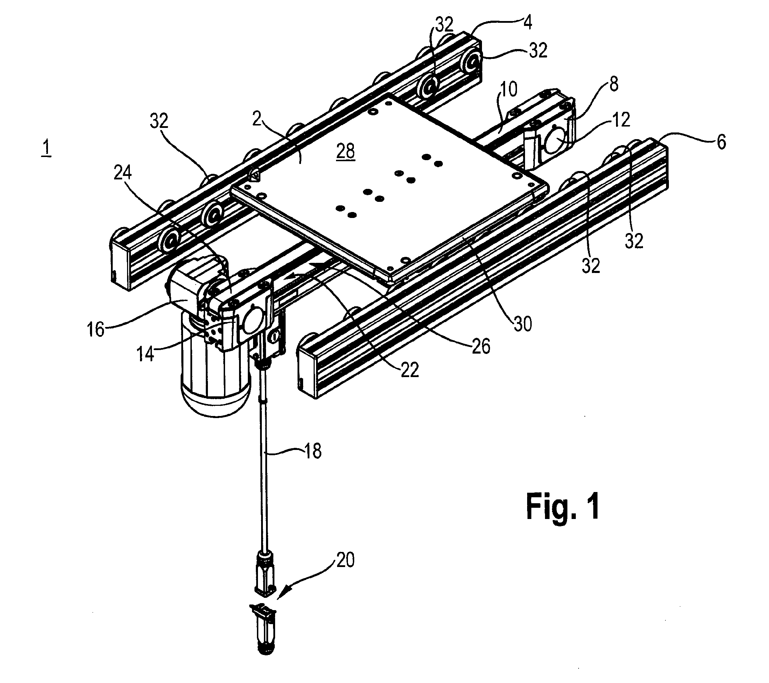

Gemäß Figur 1 hat die Fördervorrichtung 1 eine als Tragplatte 2 ausgebildete Tragvorrichtung. Die Tragplatte 2 ist zwischen zwei im Parallelabstand angeordneter Führungsschienen 4 und 6 einer Führungsbahn seitlich geführt und in einer sich in Längsrichtung der Führungsschienen 4 und 6 sich erstreckenden Förderrichtung verschiebbar gelagert. Etwa mittig zwischen den Führungsschienen 4 und 6 ist ein Zugmittelträger 8 zum Führen und Antreiben eines Zugmittels in Form eines ringförmigen Zugbands 10 angeordnet. Dieses ist umlaufend ausgebildet mit einem ersten und zweiten Umkehrbereich 12 und 14, wobei im zweiten Umkehrbereich 14 eine Antriebsvorrichtung 16 für das Zugband 10 angeordnet ist. Bei dieser handelt es sich insbesondere um einen Elektromotor, der über Stromzuführungen 18 elektrisch kontaktiert ist. Die Stromzuführung 18 ist über eine Steckerverbindung 20 mit einer nicht dargestellten Stromzuführung verbindbar.

Das Zugband 10 erstreckt sich im Wesentlichen in Förderrichtung, also entlang der Führungsschienen 4 und 6 unterhalb der Tragplatte 2. Zwischen den Umkehrbereichen 12 und 14 ist das Zugband 10 in Förderrichtung gespannt. Über eine Innenbandfläche 22 des Zugbands 10 greift die Antriebsvorrichtung 16 zum Antreiben des Zugbands 10 an. Hierzu kann die Innenbandfläche Zähne aufweisen, entsprechend einem Zahnriemen, in die dann ein Ritzel der Antriebsvorrichtung 16 eingreift. Das Zugband 10 ist dabei derart angeordnet, dass ein oberer Zugbandabschnitt 24 benachbart zur Tragplatte 2 in Förderrichtung bewegt ist und ein unterer Zugbandabschnitt 26 gegen die Förderrichtung bewegt ist. Das Zugband 10 ist magnetisch, kann also von einer Magnetkraft angezogen werden, und weist hierzu Stahllitzen auf. Diese sind umlaufend in das Zugband 10 eingebracht und mit einem Kunststoff umschlossen.

Damit die Tragplatte 2 vom Zugband 10 in die Förderrichtung bewegt werden kann, weist diese auf ihrer zum Zugband 10 weisenden Seite Permanentmagneten auf, was in den nachfolgenden Figuren näher erläutert ist.

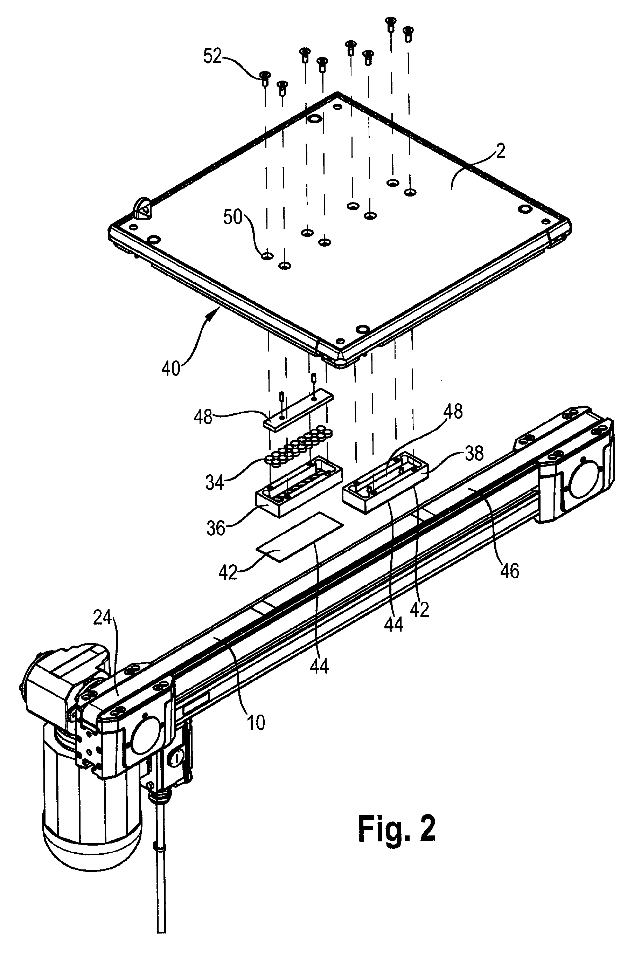

Die Tragplatte 2 hat eine Oberseite 28, auf die zu transportierende Gegenstände angeordnet werden können. Des Weiteren ist die Tragplatte 2 von einem Tragrahmen 30 eingefasst, über den diese auf den Führungsschienen 4 und 6 gelagert und geführt ist. Eine jeweilige Führungsschiene 4 und 6 weist eine Vielzahl von Lagerrollen 32 auf, von denen der Einfachheit halber nur einige in der Figur 2 mit einem Bezugszeichen versehen sind. Über die Lagerrollen 32 ist die Tragplatte 2 über ihren Tragrahmen 30 seitlich geführt und in Förderrichtung verschiebbar gelagert.

Eine Länge der Führungsschiene 4 und 6 ist in der Figur 1 nur beispielhaft dargestellt. Diese können dabei beliebig lang sein oder aus mehreren, insbesondere zusammensetzbaren, Abschnitten bestehen. Das gleiche gilt für den Zugmittelträger 8 und das Zugband 10, die auch unterschiedliche Längen aufweisen können. Es ist denkbar, mehrere Zugbänder hintereinander in Reihe für große Längen anzuordnen, und/oder ein oder mehrere Zugbänder parallel zueinander anzuordnen. Auch kann eine Mehrzahl von Tragplatten 2 auf der Fördervorrichtung 1 angeordnet werden. Die Führungsschiene 4 hat auf ihrer von der Tragplatte 2 wegweisenden Seite ebenfalls Lagerrollen 32, die für eine weitere parallel zur Fördervorrichtung 1 angeordnete in der Figur 1 nicht dargestellte Fördervorrichtung dienen.

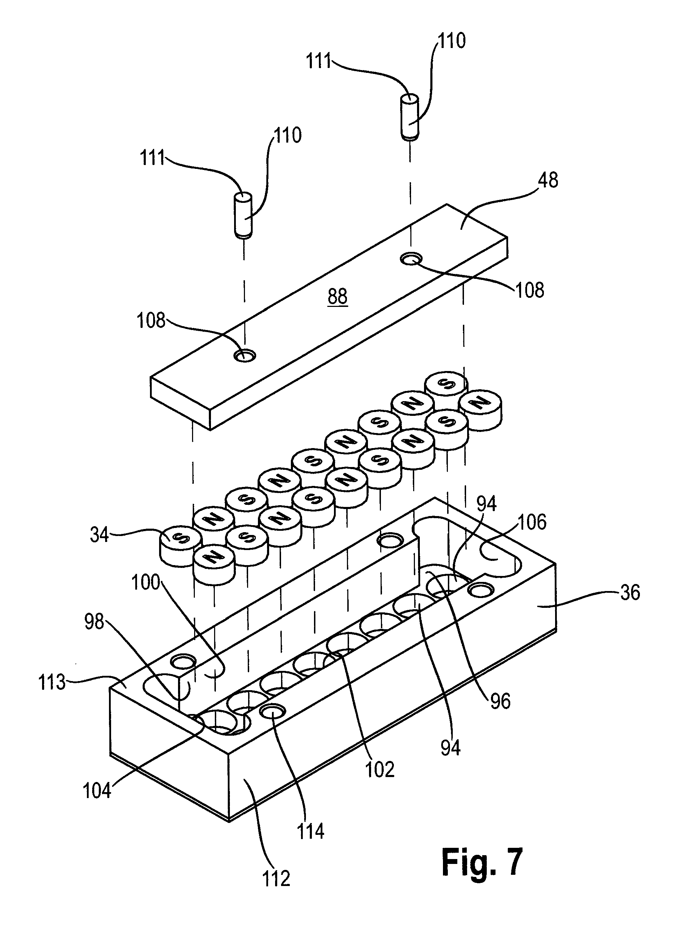

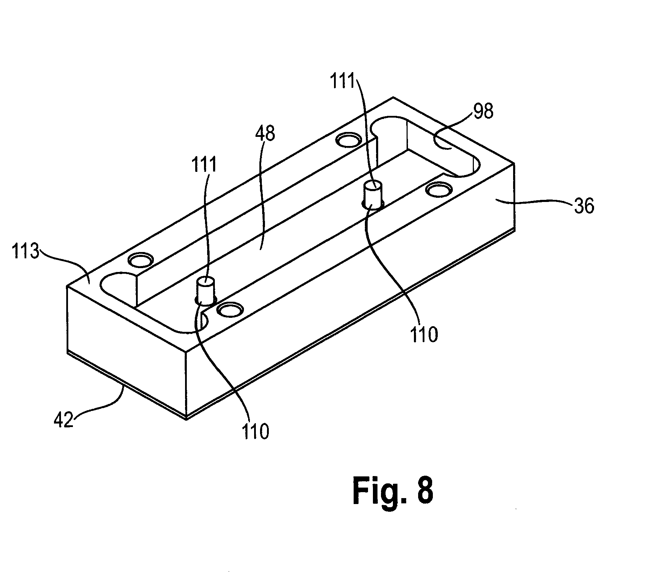

In der Figur 2 sind die Permanentmagneten 34 ersichtlich. Diese sind in einem Magnetträgergehäuse 36 angeordnet, was unten stehenden in den Figuren 7 und 8 näher erläutert ist. An der Tragplatte 2 sind hierbei zwei Magnetträgergehäuse 36 und 38 vorgesehen, die in Förderrichtung gesehen in Reihe hintereinander an einer zum Zugband 10 weisenden Unterseite 40 der Tragplatte 2 angeordnet sind. Die Magnetträgergehäuse 36 und 38 erstrecken sich im Wesentlichen in Längsrichtung der Förderrichtung und oberhalb des Zugbandabschnitts 24 des Zugbands 10. Bodenseitig ist ein jeweiliges Magnetträgergehäuse 36 und 38 mit einer Lagerplatte 42 verschlossen. Diese besteht aus einem nichtmagnetischen Material, beispielsweise Kunststoff. Eine jeweilige Lagerplatte 42 bildet an ihrer Unterseite eine von den Permanentmagneten 34 wegweisende Angriffsfläche 44 aus, an die das Zugband 10 mit einem Halteabschnitt seiner Außenwandfläche 46 anliegt oder entlang gleitet.

In ein jeweiliges Magnetträgergehäuse 36 und 38 ist zusätzlich zu den Permanentmagneten 34 ein magnetisches Element in Form einer Stahlplatte 48 eingesetzt, um die Magnetkraft der Permanentmagneten 34 zu verstärken. In der Tragplatte 2 sind für ein jeweiliges Magnetträgergehäuse 36 und 38 vier Durchgangsbohrungen 50 eingebracht, über die die Magnetträgergehäuse 36 und 38 durch Schrauben 52 an der Tragplatte 2 festgelegt sind.

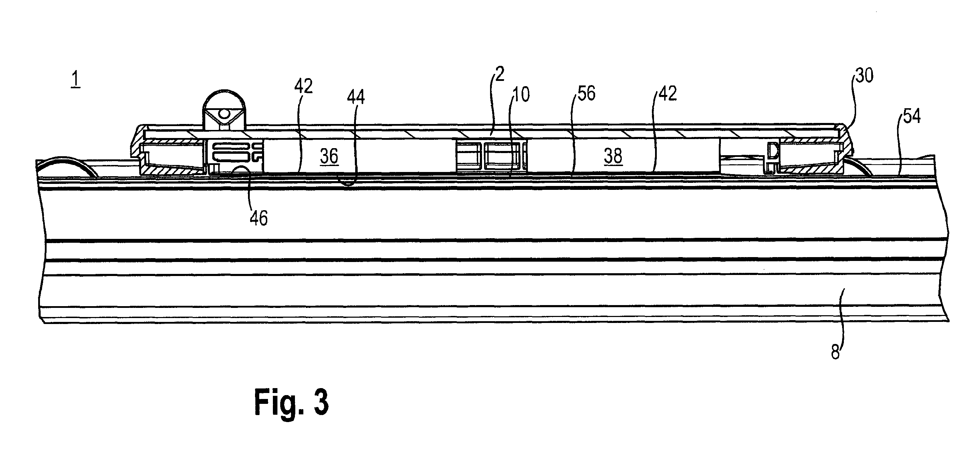

Der Längsschnitt gemäß Figur 3 durch die Fördervorrichtung 1 erfolgt in einer die Fördervorrichtung 1 etwa zwischen dem Zugmittelträger 8 und der rechten Führungsschiene 6 aus Figur 1 schneidenden Ebene. Figur 3 zeigt die Tragplatte 2 mit dem geschnittenen Tragrahmen 30 und den Magnetträgergehäusen 36 und 38. Das Zugband 10 liegt dabei mit seiner Außenbandfläche 46 an der Angriffsfläche 44 einer jeweiligen Lagerplatte 42 eines jeweiligen Magnetträgergehäuses 36 beziehungsweise 38 an. Das Zugband 10 wird dabei in diesem Bereich von einer Führungsfläche 54 des Zugmittelträgers 8 abgehoben, wodurch ein Spalt 56 entsteht, der in der Figur 3 schwarz dargestellt ist. Die Angriffsflächen 44 sind somit von der Außenbandfläche 46 des Zugbands 10 etwa im Parallelabstand, außer zu dem Teil des Zugbands, der durch die Magnetkraft der Permanentmagneten 36 aus Figur 2 an der Angriffsfläche 44 anliegt. Sind mehrere Tragplatten 2 bei der Fördervorrichtung 2 vorgesehen, so wird das Zugband 10 auch von den weiteren Tragplatten 2 durch die Magnetkraft von der Führungsfläche 54 des Zugmittelsträger 8 angehoben, wodurch eine Reibung zwischen der Führungsfläche 54 und dem Zugband 10 insgesamt stark verringert ist.

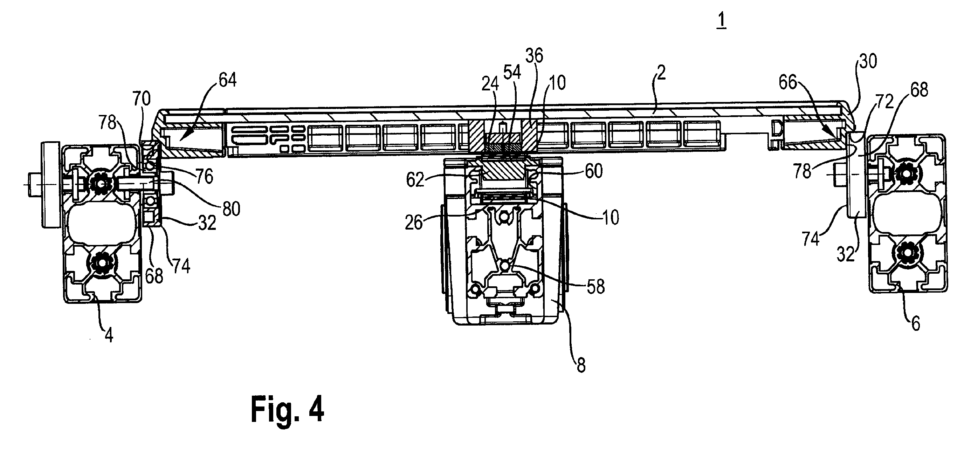

Gemäß der Figur 4 erfolgt der Querschnitt durch die Fördervorrichtung 1 durch eine Ebene, die das Magnetträgergehäuse 36 schneidet. Der Zugmittelträger 8 hat in der Figur 4 eine innere Tragstruktur 58, die auf ihrer zur Tragplatte 2 weisenden Seite eine etwa U-förmige Längsaussparung 60 aufweist, in der das umlaufende Zugband 10 angeordnet ist. Der in Förderungsrichtung bewegbare Zugbandabschnitt 24 erstreckt sich hierbei in einer in die Längsaussparung 60 der Tragstruktur 58 eingesetzten, eine im Querschnitt U-förmige Führungsaussparung aufweisende, Führungsschiene 62. Diese führt den Zugbandabschnitt 24 des Zugbands 10 seitlich und bildet die Führungsfläche 54, siehe auch Figur 3, aus. Auf der von der Tragplatte 2 weg weisenden Seite der Führungsschiene 62 ist der sich gegen die Förderrichtung bewegende Zugbandabschnitt 26 über geeignete Mittel in dem Zugmittelträger 8 geführt.

Der Tragrahmen 30 der Tragplatte 2 hat jeweils auf seiner zur Führungsschiene 4 bzw. 6 weisenden Seite L-förmig ausgestaltete Lagerflächen 64 bzw. 66. Eine jeweilige Lagerfläche 64 und 66 hat hierbei eine sich auf einer jeweiligen Umfangsfläche 68 der Lagerrollen 32 abstützende Stützfläche 70 bzw. 72 und eine sich an einer jeweiligen Stirnfläche 74 der Lagerrollen 32 abstützbare Seitenführungsfläche 76 bzw. 78. Eine jeweilige Lagerrolle 32 ist über ein Wälzlager 78, insbesondere ein Rillenkugellager, auf einer Lagerachse 80, die jeweils in den Führungsschienen 4 bzw. 6 festgelegt sind gelagert. Eine jeweilige Führungsschiene 4 und 6 ist jeweils tragstrukturartig ausgestaltet.

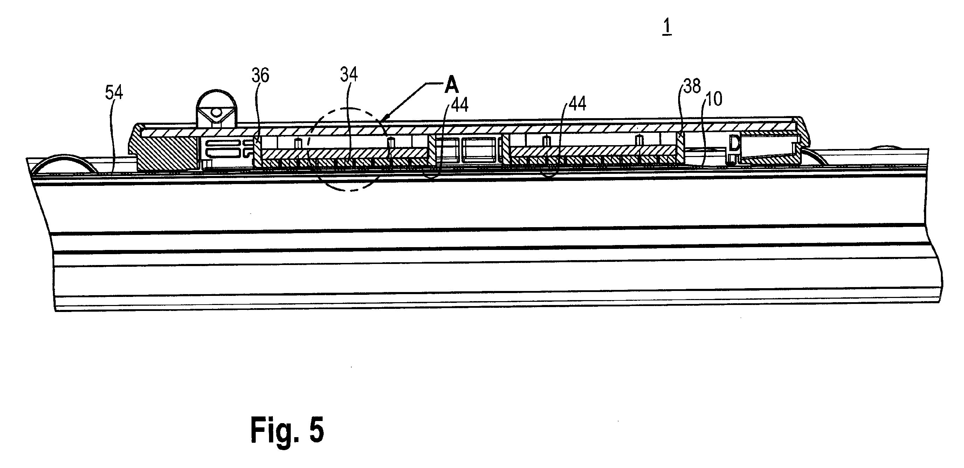

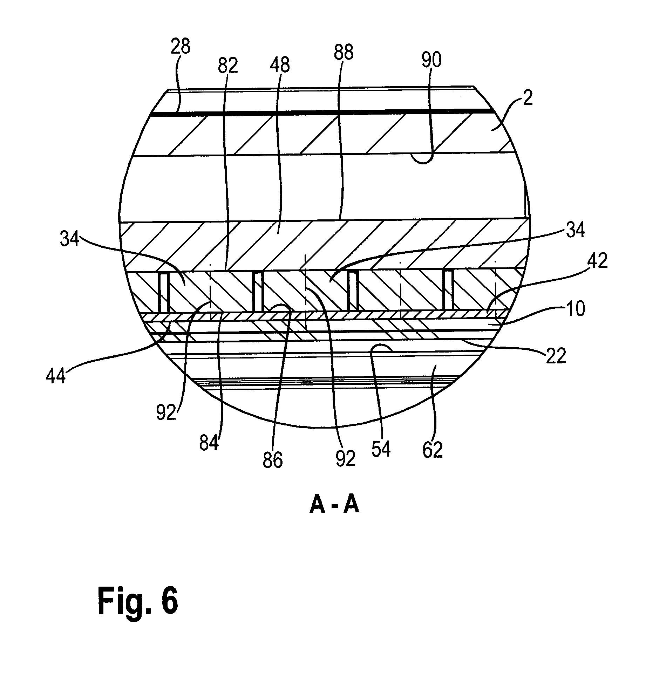

Figur 5 zeigt einen Längsschnitt durch die Fördervorrichtung 1 in einer Ebene, die sich durch die Magnetträgergehäuse 36 und 38 erstreckt. Auch hier ist das Zugband 10 erkennbar, das im Bereich der Angriffsflächen 44 der Magnetträgergehäuse 36 bzw. 38 von ihrer Führungsfläche 54 abhebt. Zur besseren Darstellbarkeit der Flächen ist in Figur 6 ein vergrößerter Querschnitt A der Figur 5 gezeigt.

Gemäß Figur 6 liegt das Führungsband 10 an der Angriffsfläche 44 der Lagerplatte 42 an. In dieser Figur 6 ist auch ein Abstand zwischen der Innenwandfläche 22 des Lagerbands 10 und der Führungsfläche 54 der Führungsschiene 62 aus Figur 4 erkennbar. Die Permanentmagneten 34 aus Figur 6 sind kreiszylindrisch ausgestaltet mit einer oberen und unteren Stirnfläche 82 bzw. 84. Diese liegt mit ihrer unteren Stirnfläche 84 an einer Innenfläche 86 der Lagerplatte 42 an. Auf ihrer oberen Stirnfläche 82 ist dabei die Stahlplatte 48 angeordnet. Zwischen einer von den Permanentmagneten 34 weg weisenden Oberseite 88 der Stahlplatte 48 und einer zur Stahlplatte 48 weisenden Unterseite 90 der Tragplatte 2 ist ein Freiraum, damit Magnetkräfte im Bereich der Oberseite 28 der Tragplatte 2 möglichst gering sind, um darauf angeordnete zu transportierende Gegenstände möglichst nicht mit Magnetkräften zu beeinflussen.

Ein Abstand von Mittelachsen 92 der Permanentmagneten 34 beträgt etwa 110 bis 115 % eines Durchmessers des Permanentmagneten 34. Ein Abstand zwischen der Angriffsfläche 44 der Lagerplatte 42 und der Außenbandfläche 46 des Tragbands 10 beträgt vorzugsweise zwischen 0,5 bis 2,5mm.

Gemäß der Explosionsdarstellung des Magnetträgergehäuses 36 in Figur 7 weist dieses insgesamt 18 Permanentmagneten 34 auf, die parallel in zwei Reihen matrixartig angeordnet sind. Das aus Aluminium bestehende Magnetträgergehäuse 36 weist zur Aufnahme eines jeden Permanentmagneten eine einen etwa kreiszylindrischen Querschnitt aufweisende Durchgangsbohrung 94 auf, in die ein jeweiliger Permanentmagnet 34 einsetzbar und über seine Außenmantelfläche lagerbar ist. Durch die Anordnung der Durchgangsbohrungen 94 wird ein Abstand zwischen den Permanentmagneten 34 bestimmt, der oben stehend erläutert ist. Dieser Abstand gilt auch für die zueinander in Reihe angeordneten Permanentmagneten 34. Die Durchgangsbohrungen 94 des Magnetträgergehäuses 36 sind in eine Bodenseite 96 des etwa topfförmig ausgebildeten Magnetträgergehäuses 36 eingebracht. Die Topfform wird durch eine in das Magnetträgergehäuse 36 eingebrachte Längsnut 98 geschaffen. Diese hat zwei sich gegenüber im Parallelabstand angeordnete Seitenflächen 100 und 102, zwischen denen die Durchgangsbohrungen 94 ausgebildet sind. Die Längsnut 98 ist im Bereich ihres jeweiligen Endabschnitts 104 bzw. 106 in Querrichtung verbreitert, in dem in eine jeweilige Seitenfläche 100 und 102 endseitig eine einen halbkreisförmigen Querschnitt aufweisende Aussparung eingebracht ist.

Die Stahlplatte 48 hat eine der Längsnut 98 entsprechende Länge und eine dem Abstand der Seitenflächen 102 und 104 der Längsnut 98 entsprechende Breite wodurch diese in der Längsnut 98 durch das Magnetträgergehäuse 36 seitlich gelagert ist. I die Oberseite 88 der Stehlplatte 48 sind zwei Sacklochbohrungen 108 eingebracht, in die jeweils ein Stift 110 eingesetzt ist. Eine von der Oberseite 88 weg weisende Stirnfläche 111 eines jeweiligen Stifts 110 liegt dabei etwa in einer Ebene mit einer zur Tragplatte 2 aus Figur 2 weisenden Oberseite 113 des Magnetträgergehäuses 36, wodurch die Stahlplatte 48 über die Stifte 110 von der Unterseite 90 der Tragplatte 2 gegen die Bodenseite 96 und/ oder gegen die Permanentmagneten 34 des Magnetträgergehäuses 36 spannbar ist.

Durch die endseitig in Querrichtung verbreiterte Längsnut 98 kann die Stahlplatte 48 in einem in das Magnetträgergehäuse 36 eingesetzten Zustand seitlich von einem Monteur oder einer Maschine gegriffen werden.

Zwischen einer jeweiligen Seitenfläche 100 und 102 und einer Außenmantelfläche 112 des Magnetträgergehäuses 36 sind jeweils zwei Bohrungen 114 eingebracht, über die das Magnetträgergehäuse 36 mit den Schrauben 52 aus Figur 2 an der Tragplatte 2 festgelegt wird.

Die Permanentmagneten 34 sind derart in dem Magnetträgergehäuse 36 angeordnet, dass ihre Pole wechselweise ausgerichtet sind. Die Pole der Permanentmagneten 34 sind in der Figur 7 durch das Bezugszeichen S für Südpol und Bezugszeichen N für Nordpol gekennzeichnet. Ausgehend von einem jeweiligen Permanentmagneten 34 sind die jeweils unmittelbar benachbarten Permanentmagneten in umgekehrter Polrichtung in dem Magnetträgergehäuse 36 angeordnet.

Figur 8 zeigt das Magnetträgergehäuse 36 in zusammengesetzten Zustand. Hierbei ist die Anordnung der Stirnflächen 111 der Stifte 110 und der Oberseite 113 des Magnetträgegehäuses 36 in einer etwa gleichen Ebene ersichtlich. Die Permanentmagneten 34 aus Figur 7 werden somit zwischen der Lagerplatte 42 und der Stahlplatte 48 im Magnetträgergehäuse 36 gelagert, wobei die Stahlplatte 48 wiederum über ihre Stifte 110 von der Tragplatte 3 aus Figur 2 und durch die Längsnut 98 im Magnetträgergehäuse 36 festgelegt ist.

Im Folgenden wird die Funktionsweise der Fördervorrichtung 1 anhand der Figuren 1 bis 8 näher erläutert.

Im Einsatz der Fördervorrichtung 1 führt das Zugband aus Figur 1 eine umlaufende Bewegung aus, wobei sich der benachbart zur Tragplatte 2 befindliche Zugbandabschnitt 24 in Förderrichtung bewegt. Wird nun die Tragplatte 2 auf die Führungsschienen 4 und 6 gesetzt, so wird das Zugband 10 durch die Permanentmagneten 34, siehe Figur 5 und 6, durch die Magnetkraft auf die Angriffsfläche 44 der Lagerplatte 42 gezogen. Das Zugband 10 hebt dann in diesem Bereich von ihrer Führungsfläche 54 ab, wodurch sich ein Spalt bildet. Haftet nun das Zugband 10 an der Angriffsfläche 44 der Tragplatte 2, so wird die Tragplatte 2 durch eine von der Antriebsvorrichtung 16 aus Figur 1 erzeugte Zugkraft des Zugbands 10 beschleunigt. Übersteigt die auf die Tragplatte 2 wirkende Zugkraft einen vorbestimmten Wert, so gleitet das Zugband 10 mit ihrer Außenbandfläche 46 aus Figur 2 an den Angriffsflächen 44 der Tragplatte 2 ab, wobei die Tragplatte 2 dann über eine Reibungskraft beschleunigt wird. Ab einer bestimmten Geschwindigkeit der Tragplatte 2 haften die Außenbandfläche 46 und die Angriffsfläche 44 der Tragplatte 2 wieder aufeinander. Die maximale auf die Tragplatte 2 übertragbare Zugkraft ist dabei vorteilhafterweise unabhängig von deren Gewicht und somit unabhängig von deren Zuladung, da das Gewicht der Tragplatte 2 durch die Führungsschienen 4 und 6 getragen wird.

Die auf die Tragplatte 2 von dem Zugband 10 übertragbare Zugkraft ist dabei abhängig von der Größe der Magnetkraft. Je größer die Magnetkraft, desto größer ist auch die auf die Tragplatte 2 übertragbare Zugkraft. Die auf das Zugband wirkende Magnetkraft kann durch die Anzahl der Permanentmagneten 34 aus Figur 7 eingestellt werden. Je mehr Permanentmagneten 34 vorgesehen sind, desto größer ist die auf das Zugband 10 wirkende Magnetkraft. Durch Veränderung der Anzahl von Permanentmagneten 34 kann somit eine Anpassung an ein Werkstückgewicht erfolgen. Die Permanentmagneten 34 aus Figur 7 haben beispielsweise einen Durchmesser von 10mm und bestehen aus NdFeB. Eine Haftkraft beträgt unmittelbar am Magneten etwa 2,4 kg, bei einem Abstand von 1 mm etwa 1,0 kg und bei einem Abstand von 2mm etwa 0,5 kg.

Eine Haltekraft zwischen dem Zugband 10 und der Tragplatte 2 beträgt vorzugsweise 10 N.

Die von dem Zugband 10 auf die Tragplatte 2 übertragbare Zugkraft kann auch durch den Reibwert zwischen der Außenbandfläche 46 und der Angriffsfläche 44, siehe Figur 3, eingestellt werden. Es hat sich gezeigt, dass ein Reibungskoeffizient µ etwa zwischen 0,3 bis 0,5 beträgt, wobei die Außenbandfläche 46 und die Angriffsfläche 44 vorzugsweise eben ausgebildet sind. Denkbar ist allerdings auch, dass diese Fläche Verzahnungen aufweisen, die formschlüssig ineinander greifen, um den Reibwert zu erhöhen.

Offenbart ist eine Fördervorrichtung zum Bewegen einer Tragplatte mit einem Zugmittel in Form eines Zugbands. Zum Ziehen der Tragplatte wird das Zugband über eine Magnetkraft zumindest eines Permanentmagneten in Anlage an diese gebracht, wodurch die Tragplatte dann über das Zugband aufgrund von Haftreibung oder Gleitreibung mitbewegt wird.

### Bezugszeichenliste:

- 1: Fördervorrichtung
- 2: Tragplatte
- 4: Führungsschiene
- 6: Führungsschiene
- 8: Zugmittelträger
- 10: Zugband
- 12: Umkehrbereich
- 14: Umkehrbereich
- 16: Antriebsvorrichtung
- 18: Stromzuführung
- 20: Steckerverbindung
- 22: Innenbandfläche
- 24: Zugbandabschnitt
- 26: Zugbandabschnitt
- 28: Oberseite
- 30: Tragrahmen
- 32: Lagerrolle
- 34: Permanentmagnet
- 36: Magnetträgergehäuse
- 38: Magnetträgergehäuse
- 40: Unterseite
- 42: Lagerplatte
- 44: Angriffsfläche
- 46: Außenbandfläche
- 48: Stahlplatte
- 50: Durchgangsbohrung
- 52: Schraube
- 54: Führungsfläche
- 56: Spalt
- 58: Tragstruktur
- 60: Längsaussparung
- 62: Führrungsschiene
- 64: Lagerfläche
- 66: Lagerfläche
- 68: Umfangsfläche
- 70: Stützfläche
- 72: Stützfläche
- 74: Stirnfläche
- 76: Seitenführungsfläche
- 78: Wälzlager
- 80: Lagerachse
- 82: Stirnfläche
- 84: Stirnfläche
- 86: Innenfläche
- 88: Oberseite
- 90: Unterseite
- 92: Mittelachsen
- 94: Durchgangsbohrung
- 96: Bodenseite
- 98: Längsnut
- 100: Seitenfläche
- 102: Seitenfläche
- 104: Endabschnitt
- 106: Endabschnitt
- 108: Sacklochbohrung
- 110: Stift
- 111: Stirnfläche
- 112: Außenmantelfläche
- 113: Oberseite
- 114: Bohrung

## Patentansprüche

1. Fördervorrichtung mit einer Tragvorrichtung (2), die über eine Führungsbahn (4, 6) verschiebbar in einer Förderrichtung gelagert und geführt ist, wobei ein Zugmittel (10) zum Ziehen der Tragvorrichtung in die Förderrichtung angeordnet ist, wobei zum Verbinden der Tragvorrichtung (2) mit dem Zugmittel (10) eine Magnetkraft eines Permanentmagneten (34) vorgesehen ist, wobei ein Magnetträgergehäuse (36, 38) an der Tragvorrichtung (2) zum Lagern und Festlegen des zumindest einen Permanentmagneten (34) angeordnet ist,
**dadurch gekennzeichnet, dass** das Magnetträgergehäuse (36, 38)
von einer nicht magnetischen Lagerplatte (42) begrenzt ist, wobei zumindest ein Abschnitt einer Außenfläche der Lagerplatte (42) die Angriffsfläche (44) bildet, und
wobei sich der zumindest eine Permanentmagnet (34) an einer Innenfläche (96) der Lagerplatte (42) abstützt.

2. Fördervorrichtung nach Anspruch 1, wobei der Permanentmagnet (34) an der Tragvorrichtung (2) angeordnet ist.

3. Fördervorrrichtung nach Anspruch 1 oder 2, wobei das Zugmittel ein Zugband (10) ist.

4. Fördervorrichtung nach Anspruch 3, wobei das Zugband (10) aus einem magnetischen Material besteht.

5. Fördervorrichtung nach Anspruch 3 oder 4, wobei das Zugband (10) eine Außenbandfläche (46) hat, die an eine Angriffsfläche (44) der Tragvorrichtung (2) anliegbar ist, wobei über die Angriffsfläche (44) die Magnetkraft auf das Zugband (10) wirkt.

6. Fördervorrichtung nach Anspruch 5, wobei die Außenbandfläche (46) des Zugbands (10) und die Angriffsfläche (44) der Tragvorrichtung (2) derart ausgestaltet sind, dass diese bei Überschreiten einer vorbestimmten auf die Tragvorrichtung (2) wirkenden Zugkraft aufeinander gleiten.

7. Fördervorrichtung nach einem der vorstehenden Ansprüche, wobei eine Mehrzahl matrixartig im Magnetträgergehäuse (36, 38) angeordneter Permanentmagneten (34) vorgesehen sind.

8. Fördervorrichtung nach einem der Ansprüche 5 bis 7, wobei die Tragvorrichtung (2) von der Führungsbahn (4, 6) derart gelagert und geführt ist, dass ein an der Angriffsfläche (44) der Tragvorrichtung (2) anliegender Halteabschnitt des Zugbands (10) von einer Führungsebene (54) des Zugbands (10) beabstandet ist.

9. Fördervorrichtung nach einem der Ansprüche 5 bis 8, wobei ein Reibungskoeffizient zwischen der Angriffsfläche (44) der Tragvorrichtung (2) und der Außenbandfläche (46) des Zugbands (10) zwischen 0,3 bis 0,5 liegt.

10. Fördervorrichtung nach einem der Ansprüche 5 bis 9, wobei ein Abstand zwischen der Angriffsfläche (44) der Tragvorrichtung (2) und der Außenbandfläche (46) des Zugbands (10) im magnetfreien Zustand etwa 0,5 bis 2,5 mm beträgt.

11. Fördervorrichtung nach einem der vorhergehenden Ansprüche, wobei die Führungsbahn zum Führen der Tragvorrichtung (2) zumindest zwei im Wesentlichen im Parallelabstand zueinander angeordnete Führungsschienen (4, 6) aufweist, zwischen denen die Tragvorrichtung (2) etwa quer zur Förderrichtung geführt ist und in Förderrichtung gleitend gelagert ist.

12. Fördervorrichtung nach einem der vorhergehenden Ansprüche, wobei an der Führungsbahn (4, 6) und / oder an der Tragvorrichtung (2) Lagerrollen (32) zum Führen und / oder Lagern der Tragvorrichtung (2) vorgesehen sind.

13. Fördervorrichtung nach einem der vorhergehenden Ansprüche, wobei ein Zugmittelträger (8) zum Führen und Lagern des Zugmittels (10) vorgesehen ist.

## Claims

1. Conveying device comprising a carrying device (2), which is mounted and guided via a guideway (4, 6) so as to be displaceable in a direction of conveyance, a pulling means (10) being arranged to pull the carrying device in the direction of conveyance, wherein a magnetic force of a permanent magnet (34) is provided to connect the carrying device (2) to the pulling means (10), wherein a magnet carrier housing (36, 38) is arranged on the carrying device (2) to mount and fix the at least one permanent magnet (34), **characterized in that** the magnet carrier housing (36, 38) is defined by a non-magnetic bearing plate (42), wherein at least a portion of an outer face of the bearing plate (42) forms the contact face (44), and wherein the at least one permanent magnet (34) is supported on an inner face (96) of the bearing plate (42).

2. Conveying device according to Claim 1, wherein the permanent magnet (34) is arranged on the carrying device (2).

3. Conveying device according to Claim 1 or 2, wherein the pulling means is a belt (10).

4. Conveying device according to Claim 3, wherein the belt (10) consists of a magnetic material.

5. Conveying device according to Claim 3 or 4, wherein the belt (10) has an outer belt face (46), which can be placed against a contact face (44) of the carrying device (2), the magnetic force acting on the belt (10) via the contact face (44).

6. Conveying device according to Claim 5, wherein the outer belt face (46) of the belt (10) and the contact face (44) of the carrying device (2) are designed in such a way that they slide over one another when a predetermined pulling force acting on the carrying device (2) is exceeded.

7. Conveying device according to one of the preceding claims, wherein a plurality of permanent magnets (34) arranged in a matrix-like manner in the magnet carrier housing (36, 38) is provided.

8. Conveying device according to one of Claims 5 to 7, wherein the carrying device (2) is mounted and guided by the guideway (4, 6) in such a way that a retaining portion of the belt (10) lying against the contact face (44) of the carrying device (2) is distanced from a guide plane (54) of the belt (10).

9. Conveying device according to one of Claims 5 to 8, wherein a coefficient of friction between the contact face (44) of the carrying device (2) and the outer belt face (46) of the belt (10) is between 0.3 and 0.5.

10. Conveying device according to one of Claims 5 to 9, wherein a spacing between the contact face (44) of the carrying device (2) and the outer belt face (46) of the belt (10) in the magnet-free state is approximately 0.5 to 2.5 mm.

11. Conveying device according to one of the preceding claims, wherein, to guide the carrying device (2), the guideway has at least two guide rails (4, 6) arranged substantially at a parallel distance from one another and between which the carrying device (2) is guided approximately transverse to the direction of conveyance and is mounted slidingly in the direction of conveyance.

12. Conveying device according to one of the preceding claims, wherein bearing rolls (32) for guiding and/or mounting the carrying device (2) are provided on the guideway (4, 6) and/or on the carrying device (2).

13. Conveying device according to one of the preceding claims, wherein a pulling means carrier (8) for guiding and mounting the pulling means (10) is provided.

## Revendications

1. Dispositif d'acheminement comprenant un dispositif de support (2) qui est monté et guidé de manière déplaçable par le biais d'une voie de guidage (4, 6) dans une direction d'acheminement, un moyen de traction (10) étant disposé pour tirer le dispositif de support dans la direction d'acheminement, une force magnétique d'un aimant permanent (34) étant prévue pour relier le dispositif de support (2) au moyen de traction (10), un boîtier de support d'aimant (36, 38) étant disposé au niveau du dispositif de support (2) pour supporter et fixer l'au moins un aimant permanent (34), **caractérisé en ce que** le boîtier de support d'aimant (36, 38) est limité par une plaque de support non magnétique (42), au moins une portion d'une surface extérieure de la plaque de support (42) formant la surface d'engagement (44), et l'au moins un aimant permanent (34) s'appuyant sur une surface interne (96) de la plaque de support (42).

2. Dispositif d'acheminement selon la revendication 1, dans lequel l'aimant permanent (34) est disposé au niveau du dispositif de support (2).

3. Dispositif d'acheminement selon la revendication 1 ou 2, dans lequel le moyen de traction est une bande de traction (10).

4. Dispositif d'acheminement selon la revendication 3, dans lequel la bande de traction (10) se compose d'un matériau magnétique.

5. Dispositif d'acheminement selon la revendication 3 ou 4, dans lequel la bande de traction (10) présente une surface de bande extérieure (46) qui peut s'appliquer contre une surface d'engagement (44) du dispositif de support (2), la force magnétique agissant sur la bande de traction (10) par le biais de la surface d'engagement (44).

6. Dispositif d'acheminement selon la revendication 5, dans lequel la surface de bande extérieure (46) de la bande de traction (10) et la surface d'engagement (44) du dispositif de support (2) sont configurées de telle sorte qu'elles glissent l'une sur l'autre lors du dépassement d'une force de traction prédéterminée agissant sur le dispositif de support (2).

7. Dispositif d'acheminement selon l'une quelconque des revendications précédentes, dans lequel une pluralité d'aimants permanents (34) disposés à la manière d'une matrice dans le boîtier de support d'aimant (36, 38) est prévue.

8. Dispositif d'acheminement selon l'une quelconque des revendications 5 à 7, dans lequel le dispositif de support (2) est monté et guidé par la voie de guidage (4, 6) de telle sorte qu'une section de retenue s'appliquant contre la surface d'engagement (44) du dispositif de support (2) de la bande de traction (10) soit espacée d'un plan de guidage (54) de la bande de traction (10).

9. Dispositif d'acheminement selon l'une quelconque des revendications 5 à 8, dans lequel un coefficient de friction entre la surface d'engagement (44) du dispositif de support. (2) et la surface de bande extérieure (46) de la bande de traction (10) est compris entre 0,3 et 0,5.

10. Dispositif d'acheminement selon l'une quelconque des revendications 5 à 9, dans lequel une distance entre la surface d'engagement (44) du dispositif de support (2) et la surface de bande extérieure (46) de la bande de traction (10) dans l'état non magnétique est approximativement comprise entre 0,5 et 2,5 mm.

11. Dispositif d'acheminement selon l'une quelconque des revendications précédentes, dans lequel la voie de guidage pour le guidage du dispositif de support (2) présente au moins deux rails de guidage (4, 6) disposés essentiellement à une distance parallèle l'un à l'autre, entre lesquels le dispositif de support (2) est guidé approximativement transversalement par rapport à la direction d'acheminement et est supporté de manière à pouvoir glisser dans la direction d'acheminement.

12. Dispositif d'acheminement selon l'une quelconque des revendications précédentes, dans lequel au niveau de la voie de guidage (4, 6) et/ou au niveau du dispositif de support (2) sont prévus des galets de support (32) pour guider et/ou supporter le dispositif de support (2).

13. Dispositif d'acheminement selon l'une quelconque des revendications précédentes, dans lequel un support de moyen de traction (8) est prévu pour guider et supporter le moyen de traction (10).
